# EUROPEAN PATENT APPLICATION

(11) **EP 1 819 185 A1**
(43) Date of publication of application: **15.08.2007**
(21) Application number: 06425082.2
(22) Date of filing: 14.02.2006
(51) Int. Cl.: H04Q 7/38

(54) **A method and apparatus for supporting real time services in packet switched mobile networks, related network and computer program product**

(71) Applicant: Siemens S.p.A., Milano (IT)
(72) Inventor: Masseroni, Carlo, 20017 Rho (MI) (IT); Trivisonno, Riccardo, 20146 Milano (IT)

(57) **Abstract**

Supporting real time (e.g. conversational and streaming) services in packet switched mobile networks such as UTRAN or GERAN includes the step of identifying the time instant to schedule a given real time service over a radio interface in the mobile network by determining a period of activation value (CAP U1, CAP U2, CAP U3) indicative of the rate at which application packets are generated for said given real time service. The time instant to schedule the real time service over the radio interface is selcted as a function of the period of activation value (CAP U1, CAP U2, CAP U3). Typically, this period of activation value (CAP U1, CAP U2, CAP U3) is determined as the regular time interval after which an application codec for a given real time service is expected to be active repetitively.

## Description

### Field of the invention

The invention related to techniques for supporting real time (e.g. conversational and streaming) services in packet switched mobile networks.

The invention specifically relates to scheduling radio resources for conversational and multimedia streaming services within the packet data transmission domain.

The invention was developed with specific attention paid to the possible use in 3GPP mobile networks, within both UTRAN (UMTS Terrestrial Radio Access Network) and GERAN (GSM/Edge Radio Access Network) contexts.

### Description of the related art

In GERAN/UTRAN networks, fulfilling service Quality of Service (QoS) constraints/requirements involves the definition of a set of "bearers": these are logical connections between coupled network elements, and the necessary data flow is guaranteed according to a set of Quality of Service attributes (and corresponding values) associated to the bearer.

Each bearer can be associated to different Quality of Service profiles: i.e. different services can be handled differently in the bearer according to priority or Quality of Service requirements.

### Object and summary of the invention

Despite the effectiveness of the prior art arrangements discussed in the foregoing, the need is still felt for a radio resource scheduling policy which, on the one hand, is easy to implement and, on the other hand, is capable of fully respecting end-to-end Quality of Service requirements of real time services.

The object of the invention is thus to provide a fully satisfactory response to that need.

According to the present invention, that object is achieved by means of a method having the features set forth in the claims that follow. The invention also relates to a corresponding system (i.e a scheduler), a related network as well as a related computer program product, loadable in the memory of at least one computer and including software code portions for performing the steps of the method of the invention when the product is run on a computer. As used herein, reference to such a computer program product is intended to be equivalent to reference to a computer-readable medium containing instructions for controlling a computer system to coordinate the performance of the method of the invention. Reference to "at least one computer" is evidently intended to highlight the possibility for the present invention to be implemented in a distributed/ modular fashion.

The claims are an integral part of the disclosure of the invention provided herein.

In its presently preferred embodiment, the invention is based on the recognition of the fact that currently the Quality of Service profile of streaming and conversational services does not contain information regarding the activation periods of the application audio/video codec, i.e. the rate at which application packets (both audio and video) are generated. Such packet generation rate, together with the application transfer delay parameter and with the average bandwidth to be guaranteed can be exploited to produce a radio resource scheduling policy that is easy to implement and at the same time allows to respect end-to-end Quality of Service requirements of real time services.

### Brief description of the annexed drawings

The invention will now be described, by way of example only, with reference to the enclosed figure of drawings, wherein:
- figure 1 is a schematic view of a typical system architecture of an UMTS network, representative of one possible field of application of the invention, and
- figure 2 is representative of a complete set of bearers for UTRAN/GERAN networks for possible use within the context of the invention, and
- figures 3, 4 and 5 are illustrative of a possible embodiment of a scheduler for use within the context of the invention.

### Detailed description of preferred embodiments of the invention

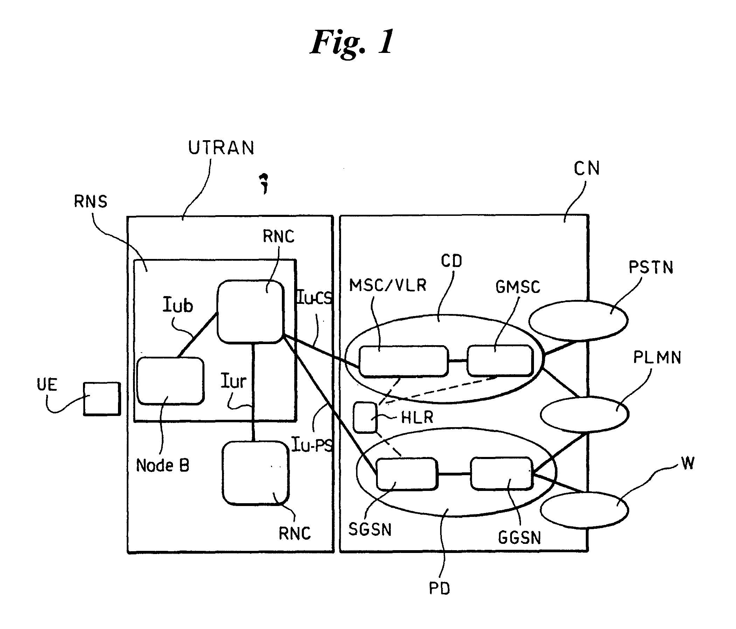

Figure 1 is a schematic diagram of a typical system architecture of a Mobile Communication Network such as a UMTS (Universal Mobile Telecommunication System) communication system. General information on the details of such a network can be gathered from the 3GPP specifications designated 3GPP TS 21.909: "Vocabulary for 3GPP specifications" and 3GPP TS 25.401 "UTRAN Overall Description".

Specifically, the two main blocks shown in figure 1 are a so-called Universal Terrestrial Radio Access Network or UTRAN adopted to provide one of a plurality of user equipments UE with access to a so-called Core Network CN. More in detail, the UTRAN plays the role of interfacing the Core Network with the UU Stratum where the user equipment UE is located.

To that end, the user equipment UE accesses a Radio Network Subsystem (RNS) comprised of a Radio Network Controller (RNC) that communicates with the user equipment UE through a module designated NodeB via an interface designated I_{ub}.

The UTRAN network comprises in fact a plurality of radio network controllers RNC, two of which are shown in the lefthand portion of figure 1. Communication between the various RNCs included in a network occurs via respective interfaces designated Iᵤᵣ.

Communication of the UTRAN network with the Core Network is via interfaces I_{u-Cs} and I_{u-PS} with the Circuit Domain and the Packet Domain, respectively.

The circuit domain is comprised of a plurality of Mobile Switching Centre/Visitor Location Register (MSC/VLR) modules having associated gateways indicated GMSC. These are comprised of Gateway Mobile Switching Centres permitting traffic exchange with the e.g. Public Switched Telephone Network (PSTN) or a Public Land Mobile Network (PLMN).

The Packet Domain is comprised of a plurality of notes designated serving GPRS Support Node (SGSNs) having associated gateway GPRS Support Node (GGSNs) permitting exchange of traffic/data with e.g. a Public Land Mobile Network (PLMN) or the Internet W.

Finally, HLR designates the Home Location Register interacting with the MSC/VLR and GMSC modules of the circuit domain CD and the SGSN modules of the Packet Domain PD.

As already indicated, in UTRAN networks (the same also applying to GERAN networks - whose structure and principles of operation are well known to those of skill in the art), service Quality of Service constraints are fulfilled via the definition of a set of "bearers". Bearers are logical connections between coupled network elements through which the data flow is guaranteed according to a set of Quality of Service attributes (and corresponding values) associated to the bearer. Each bearer can be associated to different Quality of Service profiles: i.e. different services can be handled differently in the bearer according to priority, Quality of Service requirements etc.

The Applicant have observed that, beside the guaranteed bandwidth, the Packet Data Unit (PDU) transfer delay, and the Service Data Unit (SDU) error ratio, real time (conversational or streaming) services are characterized by the period of activation of the application codec. That period, in conjunction with the maximum Packet Data Unit size and the guaranteed bandwidth, can be used to determine the proper time instant to schedule a service over the radio interface.

Specifically, the solution described herein uses a new Quality of Service parameter, named Codec Activation Period (CAP), for both conversational and streaming classes. The Codec Activation Period is defined as the regular time interval after which the application codec is expected to be active repetitively, i.e. the rate at which application packets are generated.

In other words, the Codec Activation Period (CAP) can be used to determine:
a) when to poll a Mobile Station (MS) for uplink (UL) transmission, and/or
b) when to schedule the transmission for a given Mobile Station (MS) in downlink (DL).

The exemplary arrangement described herein refers to two distinct bearers:
- the UMTS Bearer Services (located between a Correspondent Node CN gateway and a Mobile Terminal MT), and
- the Radio Access Bearer Service (between a Correspondent Node CN EDGE Node and a Mobile Terminal MT).

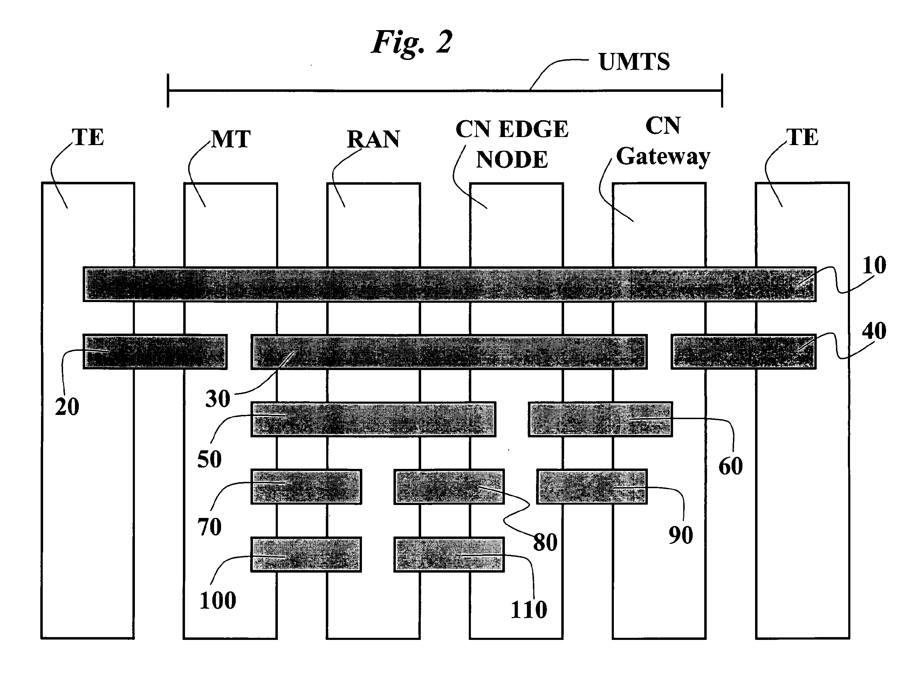

The complete set of bearers for UTRAN/GERAN networks is depicted in figure 2.

Specifically, in figure 2 the block 10 is representative of End-to-end Services between at least two Terminal Equipment TE, while the block 20 is representative of TE/MT Local Bearer Services between a Terminal Equipment TE and a Mobile Terminal MT. The block 30 is representative of a UMTS Bearer Service between the Mobile Terminal MT and a CN gateway, while the block 40 is representative of External Bearer Services between a CN gateway and a Terminal Equipment TE. Radio Access Bearer Services between the Mobile Terminal MT and a CN EDGE Node are represented by the block 50, while the block 60 is representative of CN Bearer Services between the CN EDGE Node and the CN gateway. Moreover, the block 70 makes available a Radio Bearer Service between the Mobile Terminal MT and a Remote Access Node RAN; the block 80 makes available a RAN Access Bearer Service between the Remote Access Node RAN and the CN EDGE Node; and the block 90 makes available a Backbone Bearer Service between the CN EDGE Node and the CN gateway. The block 100 is representative of a Physical Radio Bearer Service between the Mobile Terminal MT and the Remote Access Node RAN and block 110 is representative of a Physical Bearer Service between the Remote Access Node RAN and the CN EDGE Node.

The UMTS technical specifications (3GPP TS 23.107) define four different traffic classes for UMTS Bearer Service and for Radio Access Bearer Service:
- conversational class,
- streaming class,
- interactive class, and
- background class.

Each traffic class is characterized by a Quality of Service profile made of a set of Quality of Service parameters, as indicated in Table 1 below.

**Table 1**

| Traffic class | Conversational Class | Streaming class | Interactive Class | Background Class |
|---|---|---|---|---|
| Maximum bit-rate | X | X | X | X |
| Delivery order | X | X | X | X |
| Maximum SDU size | X | X | X | X |
| SDU format information | X | X | | |
| SDU error ratio | X | X | X | X |
| Residual bit error ratio | X | X | X | X |
| Delivery of erroneous SDUs | X | X | X | X |
| Transfer delay | X | X | | |
| Guaranteed bit rate | X | X | | |
| Traffic handling priority | | | X | |
| Allocation/Retenti on priority | X | X | X | X |
| Source statistics descriptor | X | X | | |
| Signalling indication | | | X | |

Real time services (as e.g. VideoCall, Voice over IP services, IPTV, Video streaming etc.) are supported via conversational and streaming classes.

The solution described herein exploits the introduction, for real time services, e.g. for both conversational and streaming classes of a new Quality of Service parameter, named Codec Activation Period (CAP). The CAP Codec Activation Period is defined as the regular time interval after which the application codec is expected to be active repetitively, i.e. the rate at which application packets are generated.

From the packet radio network point of view, the value assigned to the Codec Activation Period is the nominal interval between successive data grant opportunities for the streaming or conversational services considered. Based on that value, the ideal scheduling time tᵢ for the i-th application frame generated can be computed. Given a reference time t₀ for the 0-th frame, tᵢ = t₀ + I x CAP. With the introduction of this parameter, the 3GPP table could appear as depicted in Table 2 below.

**Table 2**

| Traffic class | Conversational class | Streaming Class | Interactive class | Background class |
|---|---|---|---|---|
| Maximum bitrate | X | X | X | X |
| Delivery order | X | X | X | X |
| Maximum SDU size | X | X | X | X |
| SDU format information | X | X | | |
| SDU error ratio | X | X | X | X |
| Residual bit error ratio | X | X | X | X |
| Delivery of erroneous SDUs | X | X | X | X |
| Transfer delay | X | X | | |
| Guaranteed bit rate | X | X | | |
| Traffic handling priority | | | X | |
| Allocation/ Retention priority | X | X | X | X |
| Source statistics descriptor | X | X | | |
| Signalling Indication | | | X | |
| CAP | X | X | | |

In order to communicate to the Base Station System (BSS) the new parameter and its value within a Packet Flow Context, the Aggregate Base Station System Quality of Service Profile (ABQP) as defined in 3GPP TS 24.008 is modified.

This information element indicates the Aggregate BSS QoS Profile (ABQP) for a BSS Packet Flow Context or an Multimedia Broadcast/Multicast Service MBMS Service Context. The ABQP is considered to be a single parameter with multiple data transfer attributes as defined in 3GPP TS 23.107.

The element coding is depicted in Table 3 below.

**Table 3**

| | 8 | 7 | 6 | 5 | 4 | 3 | 2 | 1 |
|---|---|---|---|---|---|---|---|---|
| octet 1 | IEI | | | | | | | |
| octet 2, 2a | Length Indicator | | | | | | | |
| octet 3-? | Rest of element coded as the value part of the QoS information element in 3GPP TS 24.008, not including 3GPP TS 24.008 IEI and length indicator. The shorter 3-byte form of QoS information is not allowed in BSSGP PDUs. | | | | | | | |

The part to be modified is the Quality of Service information element, which has the format depicted in Table 4 below.

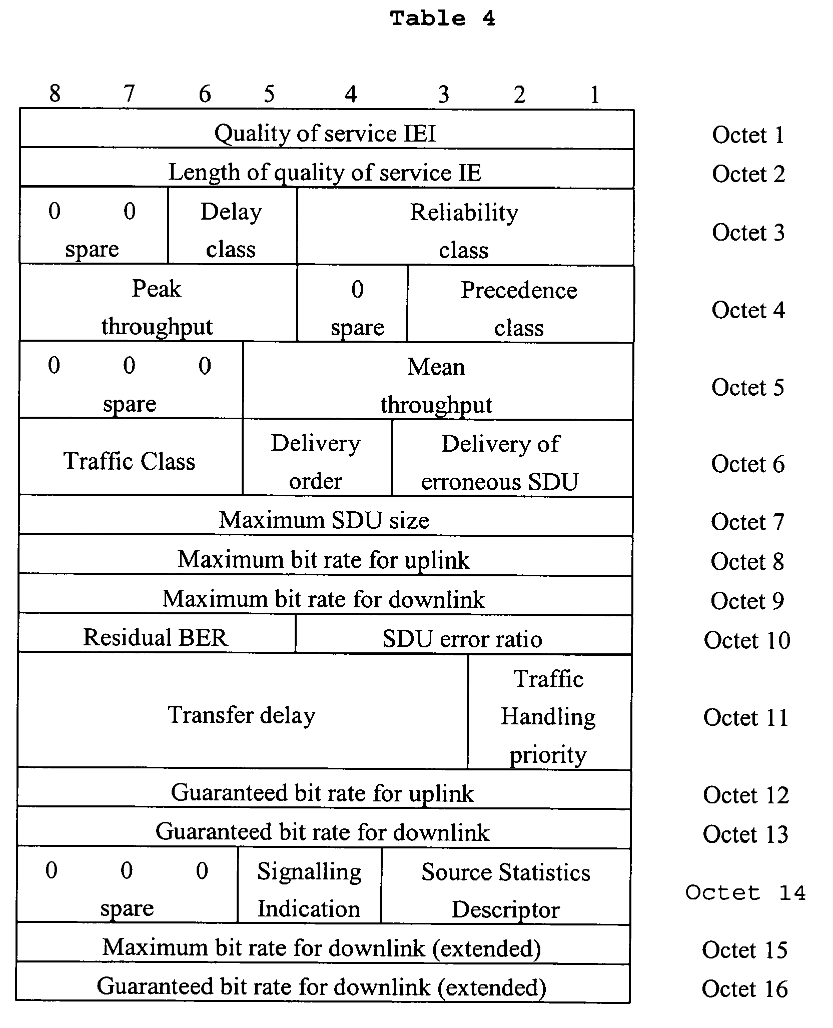

With the introduction of the Codec Activation Period parameter field, the Quality of Service information element can be as depicted in Table 5 below.

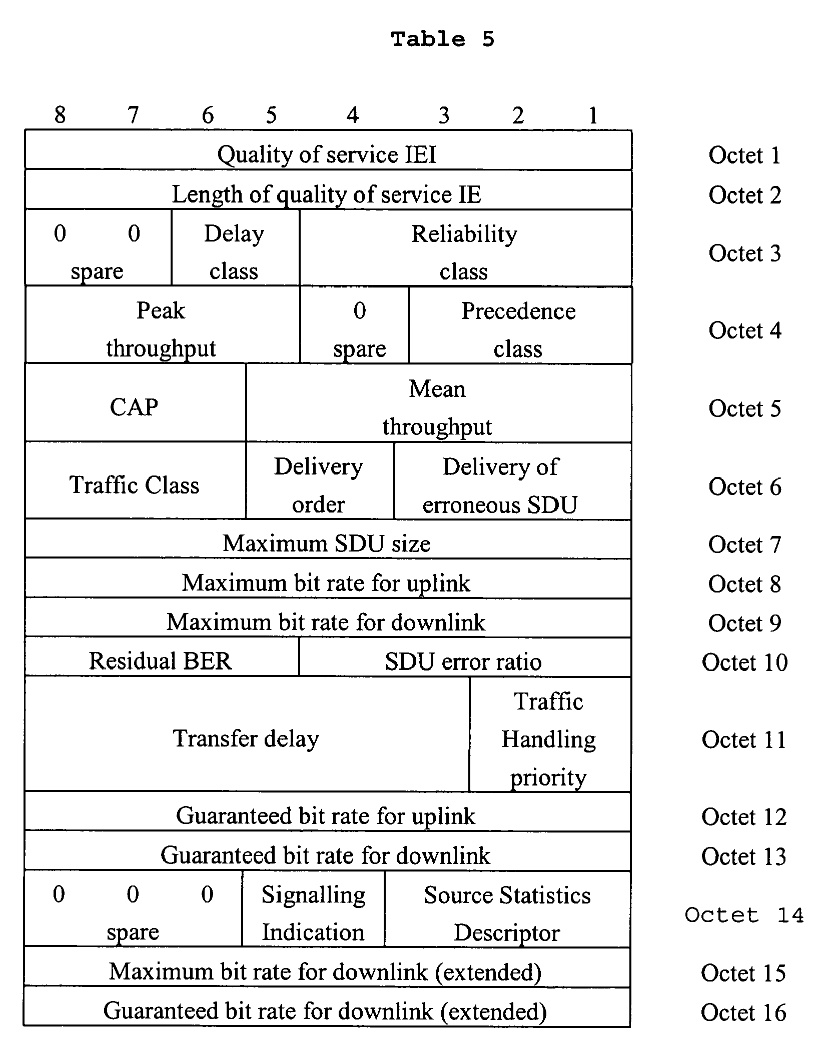

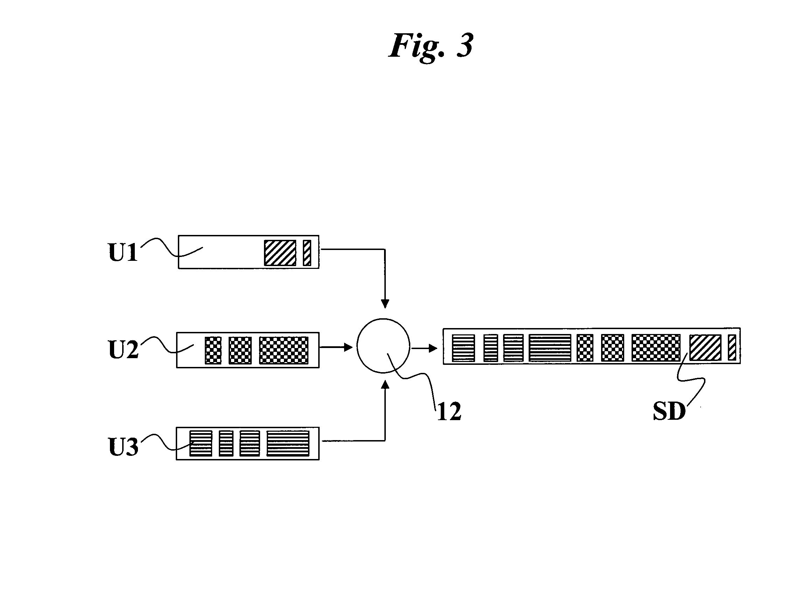

Figures 3, 4 and 5 are illustrative of a possible realization of a scheduler exploiting the CAP parameter.

The left hand portion of Figure 3 depicts, by way of example, three data queues associated to three users U1, U2, and U3, respectively, managed by a scheduler 12 to produce outpuct scheduled data SD.

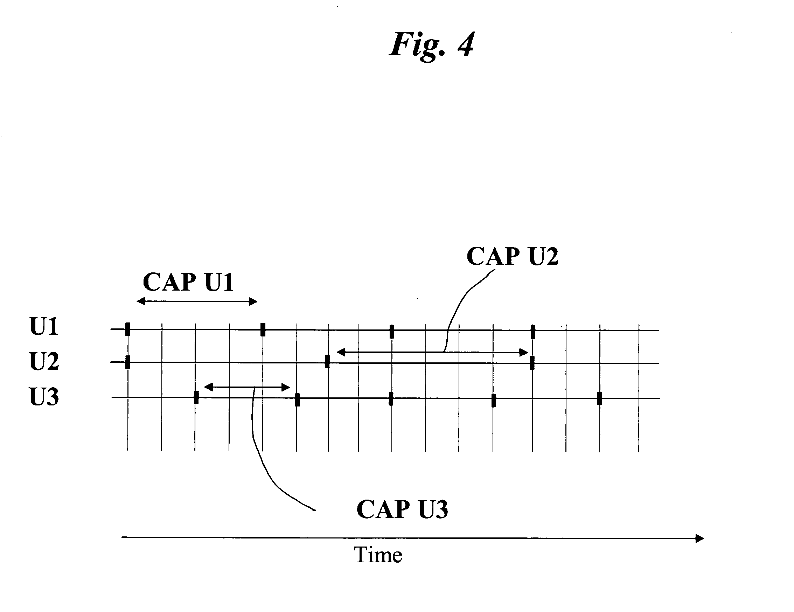

Figure 4 represents the definition of the ideal istant of scheduling for each user U1, U2, and U3, as a function of the correspondent CAP period CAP U1, CAP U2, and CAP U3.

The specific choice of a given function will primarily depend on the type of service considered, and may be effected on the basis of experimental data.

A trivial example (provided herein primarily for the sake of simplicity) may be selecting the scheduling time for a given service defining the ideal instant scheduling times as multiple of the CAP periods.

Defining the ideal istant of scheduling for each user/service considered on the basis of experimental data typically involves:
- selecting a number of different values for the CAP period, and
- defining corresponding optimum scheduling times for a given type of real time traffic considered.

In fact, the key feature of the arrangement described herein lies in that the CAP period -- is taken into account - - for scheduling purposes.

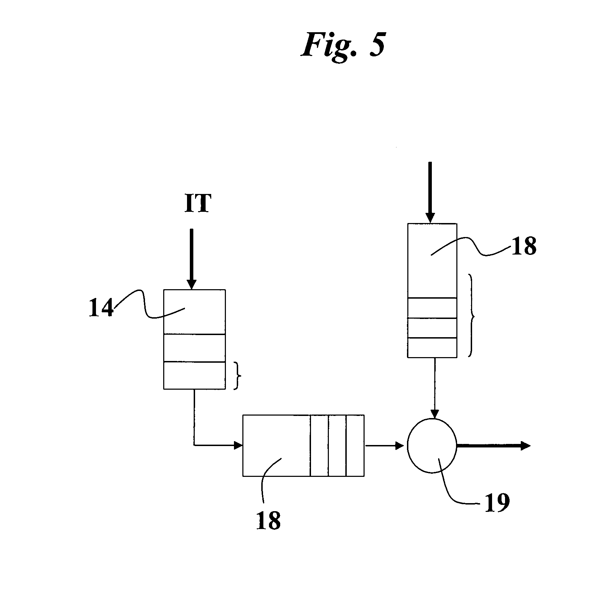

By way of example, figure 5 shows the typical structures used for implementing the scheduling principle described herein. A de-jittering buffer 14 acting on the incoming traffic IT ensures the presence of data to be transmitted at the time each user is to be scheduled. Then a normal fifo queue 16 feeds the data output pipeline, and finally a single token bucket system 18 allows producing at a policing point 19 (i.e. the scheduler proper) an output policed traffic by sharing resources among different users that may have different priorities.

The introduction of the Codec Activation Period parameter in the 3GPP standard leads to significant improvement in Radio Resource management and scheduling strategy.

The main advantages deriving from such an approach include e.g.:
- the ability to introduce effective static radio resource pre-allocation/ admission control criteria for conversational and streaming services, and
- the ability to introduce effective static prescheduling rules for conversational and real time services, both for uplink (UP) and downlink (DL), regardless the actual codec activity.
   The two improvements mentioned above would ultimately lead to
- more effective radio resource utilization, especially for uplink (UP), and
- implementation of scheduler requiring less computational effort.

It will be appreciated that, by relying on the value of the Code Application Period (CAP), the radio resource scheduler operating on the on the network side is enabled to implement:
- a more efficient radio resources scheduling for uplink (UL) transmission;
- faster radio resources scheduling criteria for both uplink (UL) and downlink (DL) transmission; and
- simpler criteria to fulfil end-to-end Quality of Service requirements.

As indicated, the basic idea underlying the arrangement described herein, is the recognition that, beside the guaranteed bandwidth, the Packet Data Unit (PDU) transfer delay, and the Service Data Unit (SDU) error ratio, real time (conversational or streaming) services can be characterized by the period of activation of the application codec. That period, in conjunction with the maximum Packet Data Unit size and the guaranteed bandwidth can be used to determine the proper time instant to schedule a service over the radio interface.

In other words, the Code Application Period (CAP) can be used to determine
a) when to poll a Mobile Station (MS) for uplink (UL) transmission and/or
b) when to schedule the transmission for a give Mobile Station (MS) in downlink (DL).

This arrangement is adapted to be easily implemented via the introduction of an additional field in a data structure

Consequently, without prejudice to the underlying principles of the invention, the details and the embodiments may vary, even appreciably, with reference to what has been described by way of example only, without departing from the scope of the invention as defined by the annexed claims.

## Claims

1. A method of supporting real time services (U1, U2, U3) in packet switched mobile networks (UTRAN, CN) the method including the step of identifying the time instant to schedule (SD) a given real time service (U1, U2, U3) over a radio interface in the mobile network and **characterized in that** it includes the steps of:
- determining a period of activation value (CAP U1, CAP U2, CAP U3) indicative of the rate at which application packets are generated for said given real time service, and
- identifying the time instant to schedule said given real time service over said radio interface as a function of said period of activation value (CAP U1, CAP U2, CAP U3).

2. The method of claim 1, **characterized in that** said period of activation value (CAP U1, CAP U2, CAP U3) is determined as the regular time interval after which an application codec for said given real time service is expected to be active repetitively.

3. The method of either of claims 1 or 2, **characterized in that** it includes the steps of:
- determining a value for at least one parameter selected out of the guaranteed bandwidth, the Packet Data Unit (PDU) transfer delay, and the Service Data Unit (SDU) error ratio, for said given real time service, and
- identifying the time instant to schedule said given real time service over said radio interface as a function of said period of activation value (CAP U1, CAP U2, CAP U3) and said value for at least one parameter.

4. The method of any of claims 1 to 3, **characterized in that** it includes the steps of:
- defining bearers as logical connections between coupled elements in said network,
- guaranteeing the data flow for said real time services as a function of a set of Quality of Service attributes associated to a respective bearer.

5. The method of claim 4, **characterized in that** it includes the step of associating each said bearer to different Quality of Service profiles.

6. The method of any of the previous claims, applied to a mobile packet network including mobile stations configured for uplink (UL) and downlink (DL) transmission, **characterized in that** it includes the step of identifying as a function of said period of activation value (CAP U1, CAP U2, CAP U3) at least one of:
- the time to poll one of said mobile stations for uplink transmission, and
- the time for one of said mobile stations to transmit downlink.

7. A scheduler system for identifying the time instant to schedule (SD) a given real time service (U1, U2, U3) over a radio interface in a packet switched mobile network (UTRAN, CN), **characterized in that** said scheduler (12) is configured for:
- determining a period of activation value (CAP U1, CAP U2, CAP U3) indicative of the rate at which application packets are generated for said given real time service, and
- identifying the time instant to schedule said given real time service over said radio interface as a function of said period of activation value (CAP U1, CAP U2, CAP U3).

8. The system of claim 7, **characterized in that** said period of activation value (CAP U1, CAP U2, CAP U3) is the regular time interval after which an application codec for said given real time service is expected to be active repetitively.

9. The method of either of claims 7 or 8, **characterized in that** said scheduler (12) is configured for:
- determining a value for at least one parameter selected out of the guaranteed bandwidth, the Packet Data Unit (PDU) transfer delay, and the Service Data Unit (SDU) error ratio, for said given real time service, and
- identifying the time instant to schedule said given real time service over said radio interface as a function of said period of activation value (CAP U1, CAP U2, CAP U3) and said value for at least one parameter.

10. The system of any of claims 7 to 9, **characterized in that** it said scheduler (12) is configured for:
- defining bearers as logical connections between coupled elements in said network,
- guaranteeing the data flow for said real time services as a function of a set of Quality of Service attributes associated to a respective bearer.

11. The system of claim 10, **characterized in that** it includes said scheduler (12) configured for associating each said bearer to different Quality of Service profiles.

12. The system of any of the previous claims, for use in a mobile packet network including mobile stations configured for uplink (UL) and downlink (DL) transmission, **characterized in that** said scheduler (12) is configured for identifying as a function of said period of activation value (CAP U1, CAP U2, CAP U3) at least one of:
- the time to poll one of said mobile stations for uplink transmission, and
- the time for one of said mobile stations to transmit downlink.

13. A packet switched network (UTRAN, CN) for providing real time services to users, the network including the system of any of claims 7 to 12.

14. The network of claim 13, in the form of a GERAN or UTRAN network.

15. A computer program product, loadable in the memory of at least one computer and including software code portions for performing the method of any of claims 1 to 6.
